# EUROPEAN PATENT APPLICATION

(11) **EP 4 678 603 A1**
(43) Date of publication of application: **14.01.2026**
(21) Application number: 25184304.1
(22) Date of filing: 20.06.2025
(51) Int. Cl.: C02F 1/46, C02F 1/461

(54) **A DEVICE FOR LIQUID TREATMENT WITH SINTERED ELECTRODES**

(30) Priority: 09.07.2024 IT 202400015796
(71) Applicant: Serenambiente S.r.l., 00195 Roma RM (IT)
(72) Inventor: Cendron, Nicola, Roma (IT)
(74) Representative: Perani & Partners S.p.A.

(57) **Abstract**

A liquid treatment device (1), comprising a casing (2) having a liquid channel (23) connecting a liquid inlet (21) and a liquid outlet (22). Electrode elements (31, 32) in the channel (23) are configured to apply an electric field to a liquid in the channel (23). A first electrode element (31) has an electrode wall having a plurality of liquid passages (34) therethrough, and is preferably made of an electrically conductive sintered material. The wall of the first electrode element (31) is arranged transversely to a liquid flow when it flows in the channel (23) so as to be traversed by the liquid flow, preferably without being circumventable by the liquid flow.

## Description

### Technical field

The present invention refers to the field of liquid treatment by means of the application of an electric field for purposes of sanitization and/or removal of undesired residual substances.

### Background art

In the art, treatment devices for liquids, especially water, are known, in which two (or more) electrodes having opposite polarities are present so as to apply an electric field to the liquid in the device.

Applying an electric field in the treatment of a liquid is known to contribute to preventing limescale formation. In particular, a suitable electric field can transform calcium carbonate, initially dispersed in the liquid in the form of calcite, and therefore potentially subject to the formation of calcareous encrustations, into a different form called aragonite, which does not deposit, but rather can bring back into suspension part of the encrustations already existing.

The electric field in the liquid also has an antimicrobial effect, as a result of microbial inactivation. Indeed, it has been proven that liquids treated with a suitable electric field carry smaller amounts of viruses and bacteria, being, for example, substantially free of sars-cov-2 viruses and salmonellosis bacteria, compared to untreated liquids.

These advantageous effects are known in the art to be more effective when the electric field is at least locally amplified thanks to the shape of the electrodes, for example due to the presence of surface threads where the electric charge accumulates as a result of electron concentration, as well as when the liquid is induced to stagnate for a longer time in the proximity of the electrodes, and when the liquid is subject to turbulent motions, which contribute to reducing limescale.

EP 3417925 describes an example of a cup-type liquid treatment device with a spiral electrode and a bar electrode which can be provided with threads.

### Summary of the invention

The object of the present invention is to improve the efficacy of the treatment of a liquid by means of electrodes.

This and further objects are achieved by a liquid treatment device according to any one of the appended claims.

In such a device, at least one of the electrodes has an electrode wall having a plurality of liquid passages therethrough. This wall is arranged transversely to a liquid flow, when it flows in the path provided inside the device, so as to be traversed by the liquid flow, preferably without being circumventable by the liquid flow.

Advantageously, the liquid flow passing through the passages of the electrode traverses the area where the electric field is maximum.

In the preferred embodiment, the liquid passages are identified by through-gaps formed in the material of this electrode, which is preferably a sintered material.

The gaps in the sintered material, besides making it intrinsically permeable to the liquid, offer several irregularities in shape where the electric charge can accumulate on the surface of the material constituting the sintered material, increasing the electric field strength.

This allows the desired effect to be obtained even with a relatively low electric voltage.

In advantageous embodiments, the electrodes can be so arranged that the liquid does not flow through a single electrode, but rather through a pair of electrodes or longer sequences of electrodes which can have alternate polarities with respect one another.

Further features and advantages of the invention will be recognized by the person skilled in the art from the following detailed description of exemplary embodiments of the invention.

### Brief description of the figures

For a better understanding of the following detailed description, some embodiments of the invention are illustrated in the accompanying drawings, wherein:
- Figure 1 shows a side view from the outside of a cup-type liquid treatment device according to an embodiment of the invention,
- Figure 2 shows a sectional front view of the device of Figure 1,
- Figure 3 shows a sectional perspective view of the device of Figure 1,
- Figure 4 shows a sectional front view of an alternative embodiment of a cup-type liquid treatment device,
- Figure 5 shows a sectional front view of a further alternative embodiment of a cup-type liquid treatment device,
- Figure 6 shows a sectional front view of another alternative embodiment of a cup-type liquid treatment device,
- Figure 7 shows a sectional view of a liquid treatment device according to a shell-and-tube embodiment of the invention,
- Figure 8 shows a different sectional view of a detail of the device of Figure 7, and
- Figures 9a and 9b show a perspective view of two electrode elements of the device of Figure 7.

### DETAILED DESCRIPTION

A liquid treatment device is illustrated in the Figures and indicated, as a whole, by the reference numeral 1.

The device 1 comprises a casing 2 for containing a liquid, which can flow therein in a continuous or batch-wise manner. In more detail, the casing 2 has a liquid inlet 21 and a liquid outlet 22. Further, a liquid channel 23 is formed inside the casing and connects the liquid inlet 21 and the liquid outlet 22, so as to allow a liquid flow to flow from the inlet 21 to the outlet 22 through the channel 23. The channel 23 is delimited by an inner surface 29 of the casing 2.

The casing 2 and the liquid channel 23 thereof can take different shapes, many of which are already known to persons skilled in the art. In the illustrated embodiments, the casing 2 has two opposite end portions 24, 25 spaced apart from each other in an axial direction X-X, and a side wall 26 connecting the two end portions 24, 25. The inlet 21 and the outlet 22, as well as the channel 23, can be variously arranged with respect to the end portions 24, 25 and the side wall 26.

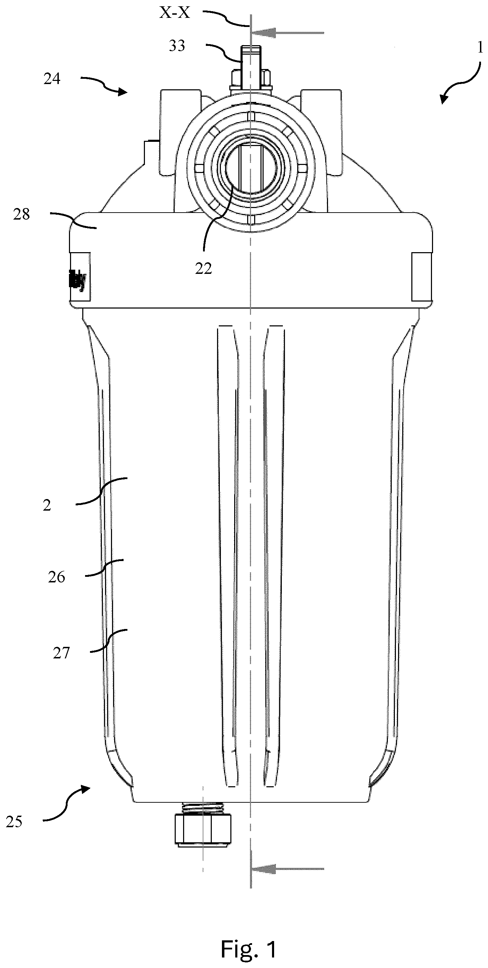

In cup-type embodiments, illustrated in Figures 1-6, the two end portions 24, 25 are a head portion 24 and a bottom portion 25. In use, the head portion is adapted to be placed above the bottom portion. In more detail, the casing 2 comprises a receptacle body 27 and a cover 28, where the receptacle body 27 defines the bottom portion 25 and the side wall 26, whereas the cover 28 identifies at least partly the head portion 24.

In this embodiment, the liquid inlet 21 and the liquid outlet 22 are preferably formed in the head portion 24, in particular in the cover 28. Therefore, the liquid flow enters from the inlet 21 at the head portion 24, flows downwards at least partly in the receptacle body 27, which thus delimits at least part of the channel 23, and exits upwards from the outlet 22 at the head portion 24, as well.

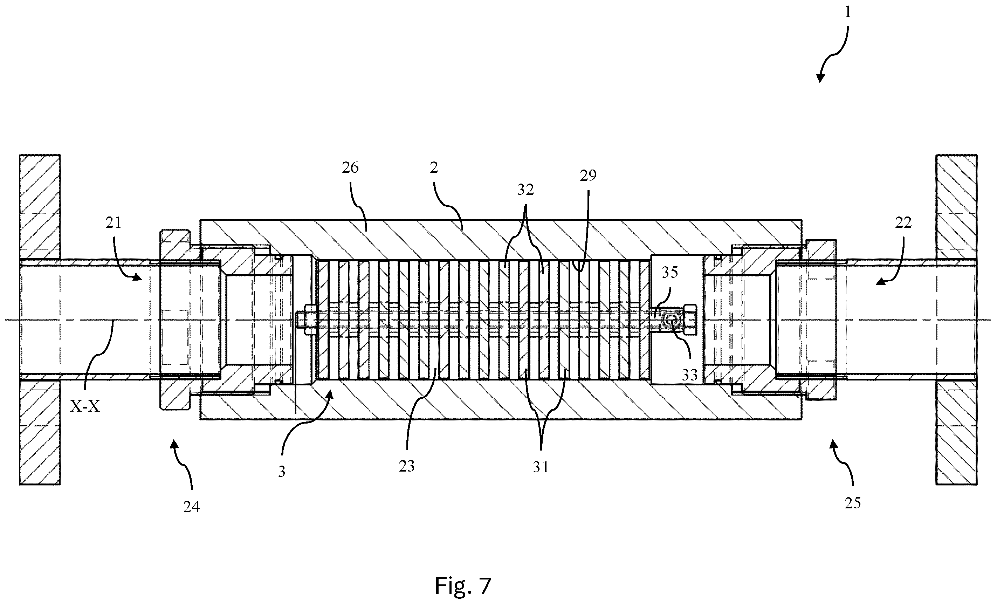

In a shell-and-tube alternative embodiment illustrated in Figures 7-9b, the liquid inlet and outlet 21, 22 are preferably placed at the opposite end portions 24, 25. Therefore, the channel 23 extends mainly in the axial direction X-X, and no significant changes in the direction of the liquid flow are necessary. In still other, not illustrated, embodiments, one or more of the inlet 21 and the outlet 22 can be placed at the side wall 26.

In all of these embodiments, the inlet 21 and the outlet 22 can be shaped in order to direct the liquid along the axial direction X-X or along a direction transverse to the axial direction X-X.

The device 1 comprises an electrode system 3 comprising a plurality of electrode elements 31, 32 arranged in the liquid channel 23 and made of an electrically conductive material. Optionally, the electrode system 3 also comprises an electric power supply (not shown) having two or more terminals connected to distinct electrode elements 31, 32. The power supply can be inside or outside the casing 2. Alternatively, the device 1 can be devoid of any power supply of its own, but the electrode system 3 can comprise one or more connectors 33 configured to connect the electrode elements 31, 32 to an external power supply, as described in more detail below.

It should be noted that in different embodiments the electrode system 3 can be powered with single-phase or three-phase, direct or alternating current. At least two electrode elements 31, 32 are powered with polarities which are stably or instantly opposite to each other so as to apply an electric field to the liquid in the liquid channel 23.

The invention provides for at least one first electrode element 31 has a permeable electrode wall having a plurality of liquid passages 34 therethrough, so that it can be traversed by the liquid. This electrode wall is arranged so as to be traversed by the liquid flow, in particular it is arranged transversely to a flow direction of the liquid flow when it flows in the liquid channel 23 from the inlet 21 to the outlet 22.

Preferably, the first electrode element 31 is arranged so as not to be circumventable by the liquid flowing in the liquid channel 23. Therefore, when flowing from the inlet 21 to the outlet 22, the liquid is forced to traverse the liquid passages 34 of the first electrode element 31.

In various embodiments, it is possible that the features just mentioned can be referred to a single first electrode element 31, or to plural, distinct electrode elements 31, 32, having the same or different polarities to each other, optionally to all the electrode elements 31. Hereinafter, for the sake of simplicity, these features will be described in more detail mainly referring to the first electrode element 31.

In particular, in the preferred embodiment, the first electrode element 31 is made of an electrically conductive material having through-gaps. The gaps make the material permeable and identify the liquid passages 34 through the electrode element 31. In particular, preferred materials are sintered materials based on metals or other conducting materials.

As is known, sintered materials are granular materials, the grains thereof being at least partly joined together. This is obtained by heating a starting material in non-cohesive, granular form, such as a powder or sand, without reaching the melting point.

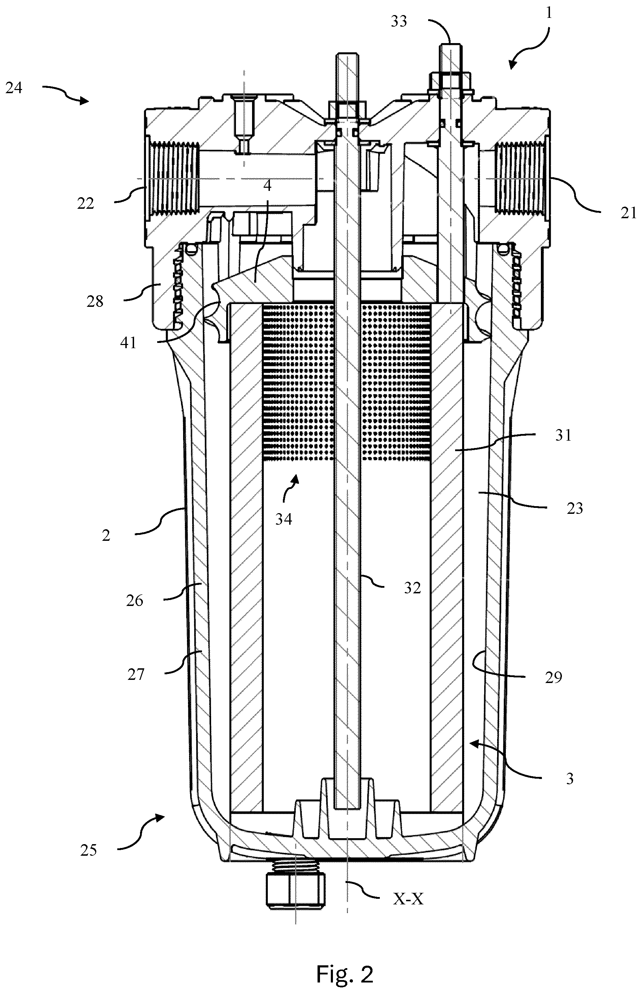

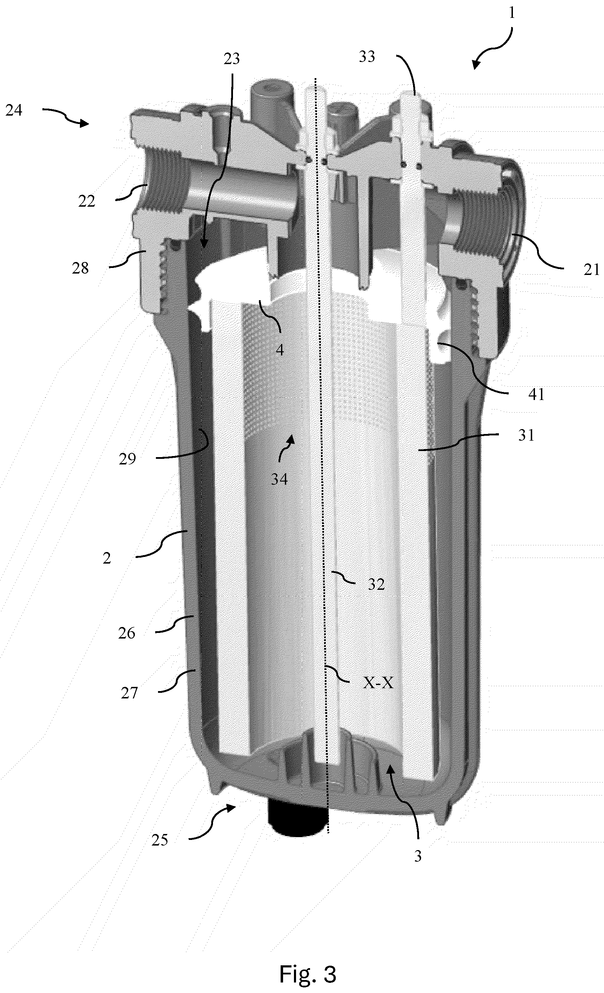

An example of the first electrode element 31 made of sintered material is schematically shown in Figures 2 and 3, although, for the sake of simplicity, the liquid passages 34 have been depicted only for a portion of the electrode wall, and arranged according to an orderly pattern, whereas in reality their arrangement is random.

The invention can also be implemented with non-sintered materials having similar properties, in particular having through-gaps that make it permeable, for example other granular materials, or open-pore porous materials.

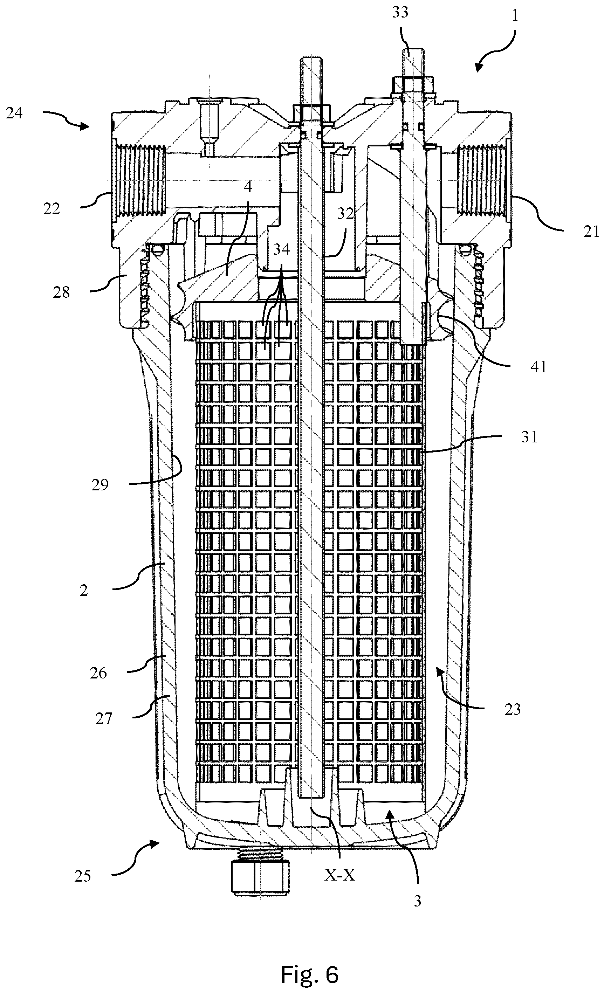

**In** another example embodiment, as shown in Figure 6, the first electrode element 31 can be identified by a lattice, such as a grid or a mesh, formed by elementary portions, each one identifying a liquid passage 34. **In** this case, compared to a material having through-gaps, generally a smaller slowing down effect on the liquid and a smaller number of irregularities exist. Therefore, materials having through-gaps are generally more effective in the treatment of a liquid.

The electrode wall is generally delimited by one or more electrode edges. For example, the first electrode element 31 can have a planar shape, such as a circular or polygonal shape, surrounded by a single electrode edge. In some alternatives, the first electrode element 31 can have three-dimensional shapes where the electrode wall is delimited by more electrode edges, such as a cylindrical shape where two opposite circular edges are present.

Preferably, to prevent the liquid from circumventing the first electrode element 31, each electrode edge of the first electrode element 31 has no free portions. For example, each electrode edge of the first electrode element 31 can contact the inner surface 29 of the casing 2 over its entire length.

Alternatively, other elements are possibly locally interposed between the inner surface 29 and an electrode edge of the first electrode element 31. In this case, the electrode edge of the first electrode element 31 can be locally spaced apart from the inner surface 29, however, in any case, it is preferable that the element therebetween prevents the liquid from passing between the electrode edge and the inner surface 29. In this case, there are no liquid passages along the inner surface 29 that are open between the electrode edge and the inner surface 29. Anyway, for this evaluation, the liquid passages 34 formed in the electrode wall itself are not to be considered.

Therefore, the electrode wall of the first electrode element 31 preferably extends across an entire cross-section of the channel 23, where the cross-section can be planar or curved.

In the embodiments of Figures 1-6, the first electrode element 31 separates an inner compartment and a peripheral compartment in the liquid channel 23. The peripheral compartment surrounds the inner compartment and extends between the side wall 26 and the first electrode element 31. Further, the first electrode element 31 preferably contacts the head portion 24 and the bottom portion 25. In more detail, the first electrode element 31 has two distinct electrode edges which contact the head portion 24 and the bottom portion 25, respectively.

For example, in Figures 1-6, the first electrode element 31 has a cylindrical shape extending around a central axis developing in the axial direction X-X.

It should be noted that, in different embodiments, the liquid inlet 21 can be in fluid communication with the peripheral compartment, and the liquid outlet 22 can be in fluid communication with the inner compartment, or vice versa.

Still in the embodiment of Figures 1-6, a second electrode element 32 is arranged inside the inner compartment. The second electrode element 32 is configured to be powered with an electrical polarity which is opposite with respect to the first electrode element 31.

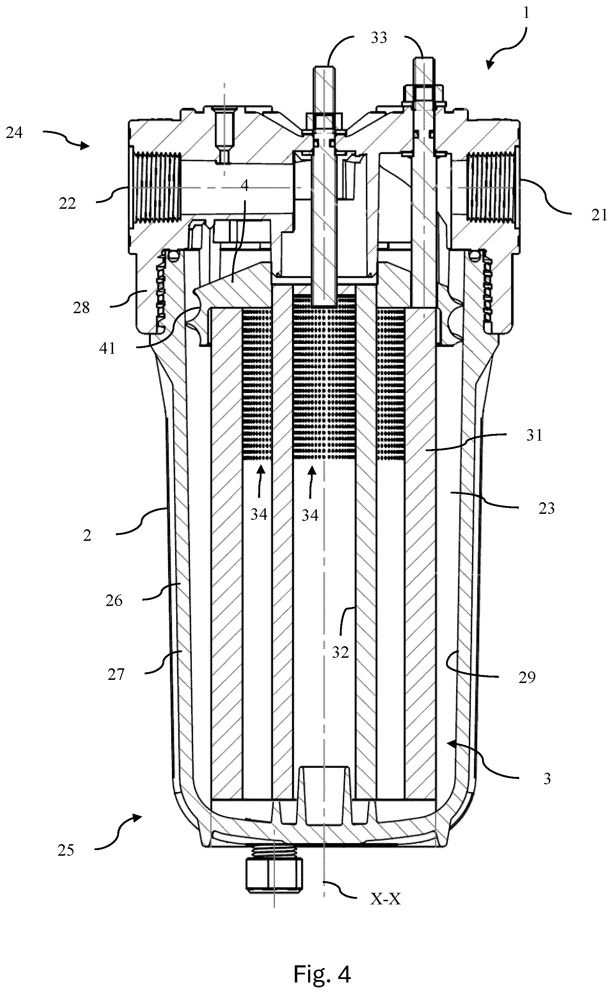

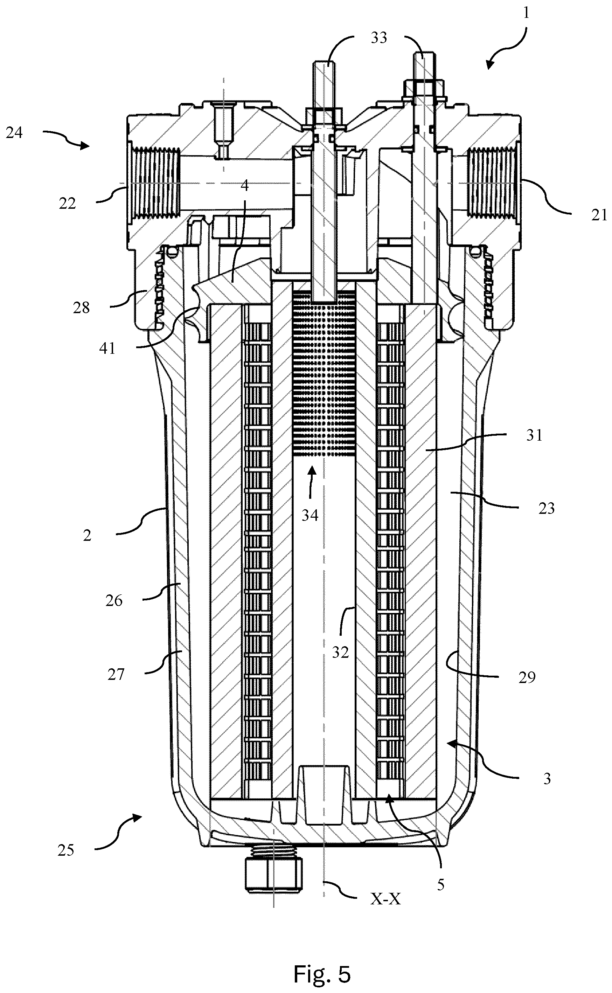

Preferably, the second electrode element 32 is concentric to the first electrode element 31 and/or extends along the central axis. It is thus spaced apart from the first electrode element 31 in a radial direction. In particular, in Figures 2, 3 and 6, the second electrode element 32 is bar-shaped. Alternatively, as shown in Figures 4 and 5, also the second electrode element 32, like the first electrode element 31, has an electrode wall which has a plurality of liquid passages 34, being preferably made of sintered material, and is arranged transversely to the liquid flow so as to be traversed by the same.

In this case, the inner compartment is an intermediate compartment delimited between the first and the second electrode element 31, 32, and is not in direct fluid communication with the inlet 21 or the outlet 22. Further, the second electrode element 32 separates the inner compartment and a further, central compartment which can be in fluid communication with the inlet 21 or the outlet 22. Similarly to the first electrode element 31, the second electrode element 32 can be cylindrical and/or can contact the head portion 24 and the bottom portion 25 of the casing 2.

In some embodiments, a permeable barrier 5 can be interposed between the first and the second electrode element 31, 32. The permeable barrier 5 is not intended to be electrically powered.

The permeable barrier 5 has one or more liquid passages therethrough so that the liquid can move from one electrode element 31, 32 to another. For example, the permeable barrier 5 can be identified by a net element, as illustrated in Figure 5. Advantageously, the permeable barrier 5 can contribute to making the motion of the liquid more turbulent.

Preferably, the permeable barrier 5 is made of an electrically insulating material, such as polyester or another polymeric or ceramic material, and superficially contacts the first and the second electrode element 31, 32, both provided with liquid passages. Therefore, the permeable barrier 5 is tightened between the first and the second electrode element 31, 32.

In an embodiment, a plurality of cylindrical and permeable first electrode elements 31 and a plurality of cylindrical and permeable second electrode elements 32 can be provided, which are alternated and spaced apart from each other in a radial direction. Further, a plurality of permeable barriers 5 can be interposed between the first and second electrode elements 31, 32, for example between each pair of consecutive first and second electrode elements 31, 32. In particular, first and second electrode elements 31, 32 and permeable barriers 5 can form a single rigid pack.

In an alternative, not illustrated variation, two electrode elements having electrode walls provided with liquid passages 34 and transverse to the flow can be cylindrical and concentric, however they can be electrically powered with the same polarity, whereas a distinct electrode element, permeable or not permeable to the liquid, can be arranged therebetween and powered with opposite polarity.

In the embodiment of Figures 7-9b, two or more electrode elements 31, 32 are spaced apart from each other in the axial direction X-X and have electrode walls transverse to the flow, with the liquid passages 34. Preferably, each of them has a planar shape transversal to the axial direction X-X, for example a disk shape or a polygonal shape. In fact, the flow preferably flows in the axial direction X-X.

It is preferable that, in this embodiment, the electrode elements 31, 32 provided with the liquid passages 34 and transverse to the flow are in such a number and are arranged in such a way that a plurality of intermediate compartments is delimited therebetween. The liquid can thus undergo several passages through the electrode elements 31, 32 and be treated more effectively. Anyway, this feature can also be applied to devices 1 in which the casing 2 has a significantly different shape compared to Figures 7-8.

Preferably, in the embodiment of Figures 7-9b, first and second electrode elements 31, 32 powered with opposite polarities are arranged interleaved between each other along the liquid channel 23. Anyway, it is not mandatory that there is an exact alternation between a first electrode element 31 with one polarity and a second electrode element 32 with a second polarity, but sometimes more electrode elements 31, 32 with the same polarity can be consecutive to each other.

Further, although in Figures 7-9b all the electrode elements 31, 32 depicted are permeable and transverse to the flow (the gaps in the material being omitted in the Figures), optionally one or more of the electrode elements can be circumventable by the liquid without necessarily having liquid passages 34. For example, in a not illustrated embodiment, a plurality of first electrode elements 31 powered with the same polarity can all be of the type provided with liquid passages 34 and transverse to the flow, delimiting intermediate compartments therebetween, whereas a plurality of second electrode elements 32 having an opposite polarity can be of the circumventable type and can be arranged inside the intermediate compartments.

In the embodiment of Figures 7-9b, in order to power the electrode elements 31, 32, the electrode system 3 comprises a first and a second pole conductor 35, 36, e.g. bar conductors. The first and the second pole conductor 35, 36 are configured to carry an electric power supply with electrical polarities which are opposite to each other.

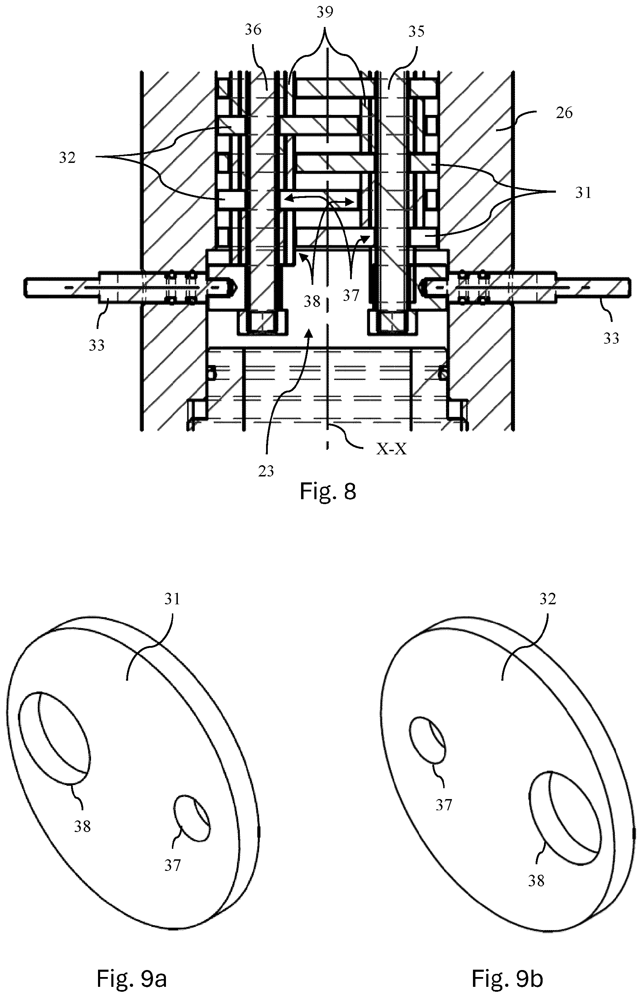

Preferably, the first and the second pole conductor 35, 36 are arranged inside the channel 23. Further, they extend mainly in the axial direction X-X. In Figure 8, the first and the second pole conductor 35, 36 are in contact with the connectors 33 extending through the casing 2 to receive the electric power supply from the outside.

The first pole conductor 35 is in electrical contact with all the first electrode elements 31 and electrically isolated from all the second electrode elements 32. Conversely, the second pole conductor 36 is in electrical contact with all the second electrode elements 32 and electrically isolated from all the first electrode elements 31.

In an example embodiment, each electrode element 31, 32 has a first through-hole 37 and a second through-hole 38. Preferably, the second through-hole 38 has larger cross-sectional dimensions (in a section perpendicular to the axial direction X-X) than the cross-sectional dimensions of the first through-hole 37. For example, the first and the second through-hole 37, 38 can be circular holes with different diameters. An example of such a first and second electrode element 31, 32 is illustrated in Figures 9a and 9b, respectively.

The first pole conductor 35 extends through through-holes 37, 38 of the first and second electrode element 31, 32 which are preferably aligned with each other. In particular, the first pole conductor 35 extends through first through-holes 37 of the first electrode elements 31 and second through-holes 38 of the second electrode elements 32. Also the second pole conductor 36 extends through through-holes 37, 38 of the electrode elements 31, 32 which are preferably aligned with each other. However, the second pole conductor 36 extends through first through-holes 37 of the second electrode elements 32 and second through-holes 38 of the first electrode elements 31.

In more detail, the first pole conductor 35 is in electrical contact with the first electrode elements 31 at the first through-holes 37 thereof. Instead, insulating elements 39 are arranged in the second through-holes 38 of the second electrode elements 32 to electrically insulate the second electrode elements 32 from the first pole conductor 35. Similarly, the second pole conductor 36 is in electrical contact with the second electrode elements 32 at the first through-holes 37 thereof, whereas insulating elements 39 are arranged in the second through-holes 38 of the first electrode elements 31 to electrically insulate the first electrode elements 31 from the second pole conductor 36.

Similarly to the cup-type embodiment, optionally one or more permeable barriers 5 can be interposed between the first and second consecutive electrode elements 31, 32. In particular, the permeable barriers 5 can be made of an electrically insulating material and can each be in surface contact with a first and a second electrode element 31, 32 tightened therebetween. This allows to make the motion more turbulent, to remix the liquid causing the properties thereof to be more uniform, and to reduce the distance between the first and second electrode elements 31, 32, increasing the number thereof, the overall dimensions being equal.

Each barrier 5 can be permeable as it is made like a net, or it can be a solid element with interstitial liquid passages, or a solid element with one or more straight or tortuous through-channels. In particular, each permeable barrier 5 can identify a static mixer.

Optionally, as shown in Figures 2-6, the device 1 can comprise deflector members 4 arranged between the liquid inlet 21 and the first electrode element 31. The deflector members 4 are configured to impart to the liquid flowing in the channel 23 a spiral motion around the first electrode element 31, in particular in the peripheral compartment. Advantageously, the incoming liquid is better distributed along the surface of the first electrode element 31 and remains in the proximity of the first electrode element 31 for a longer time.

The phenomenon of stagnation of the liquid in the proximity of the bottom portion 25 is thereby reduced in the cup-type embodiments, the new incoming liquid being instead caused to pass through the first electrode element 31 mainly in the proximity of the head portion 24, reducing the treatment times.

Further, the turbulent motion facilitates the nucleation of the crystalline form of aragonite, and therefore contributes to preventing limescale formation.

In an example embodiment, the deflector members 4 comprise a deflector body having a surface with helix- or spiral-shaped guides 41. Preferably, the guides 41 face the inner surface 29 of the casing 2, in particular the side wall 26.

## Claims

1. A liquid treatment device (1), comprising:
- a casing (2), having two opposite end portions (24, 25) spaced apart from each other in an axial direction (X-X), and a side wall (26) connecting the two end portions (24, 25), the casing (2) having a liquid inlet (21) and a liquid outlet (22), wherein a liquid channel (23) is formed in the casing (2), mainly extends in the axial direction (X-X), and connects the liquid inlet (21) and the liquid outlet (22),
- an electrode system (3) comprising a plurality of electrode elements (31, 32) arranged in the liquid channel (23), wherein the electrode elements (31, 32) comprise first electrode elements (31) and second electrode elements (32), configured to be electrically powered with electrical polarities which are opposite to each other so as to apply an electric field to a liquid in the liquid channel (23),
wherein each electrode element (31, 32) has an electrode wall having a plurality of liquid passages (34) therethrough and arranged transversely to a liquid flow when it flows in the liquid channel (23) from the liquid inlet (21) to the liquid outlet (22), so as to be traversed by the liquid flow,
**characterized in that:**
- the electrode elements (31, 32) are spaced apart from each other in the axial direction (X-X) and have, each, a planar shape transversal to the axial direction (X-X), so as to delimit a plurality of intermediate compartments therebetween in the liquid channel (23).

2. The device (1) according to claim 1, wherein each electrode element (31, 32) is made of an electrically conductive sintered material.

3. The device (1) according to claim 1 or 2, wherein each electrode element (31, 32) is arranged so as not to be circumventable by the liquid flow.

4. The device (1) according to any one of claims 1 to 3, wherein the electrode system (3) comprises an electric power supply having two or more terminals connected to distinct electrode elements (31, 32).

5. The device (1) according to any one of claims 1 to 4, wherein the first and the second electrode elements (31, 32) are arranged interspersed with each other along the liquid channel (23).

6. The device (1) according to any one of claims 1 to 5, wherein the electrode system (3) comprises a first and a second pole conductor (35, 36), configured to carry an electric power supply with electrical polarities which are opposite to each other, the first pole conductor (35) being in electrical contact with all the first electrode elements (31) and electrically isolated from all the second electrode elements (32), the second pole conductor (36) being in electrical contact with all the second electrode elements (32) and electrically isolated from all the first electrode elements (31).

7. The device (1) according to claim 6, wherein:
- each first and second electrode element (31, 32) has a first through-hole (37) and a second through-hole (38), the second through-hole (38) having larger cross-sectional dimensions than the first through-hole (37),
- the first pole conductor (35) passes through the first through-holes (37) of the first electrode elements (31), being in contact therewith, and the second through-holes (38) of the second electrode elements (32), being isolated therefrom, and
- the second pole conductor (36) passes through the first through-holes (37) of the second electrode elements (32), being in contact therewith, and the second through-holes (38) of the first electrode elements (31), being isolated therefrom.

8. The device (1) according to any one of claims 1 to 7, wherein the liquid inlet and outlet (21, 22) are placed at the opposite end portions (24, 25) of the channel (23).

9. The device (1) according to any one of claims 1 to 8, wherein the electrode elements (31, 32) has a disk shape or a polygonal shape.
